# EUROPEAN PATENT APPLICATION

(11) **EP 4 757 302 A1**
(43) Date of publication of application: **10.06.2026**
(21) Application number: 24852263.3
(22) Date of filing: 05.08.2024
(51) Int. Cl.: H04N 1/00

(54) **SECURITY PAPER DETECTION DEVICE AND SECURITY PAPER PRINTING DEVICE INCLUDING SAME**

(30) Priority: 04.08.2023 KR 20230102408
(71) Applicant: Lee, Myung Shin, Gyeonggi-do 13105 (KR)
(72) Inventor: Lee, Myung Shin, Gyeonggi-do 13105 (KR)
(74) Representative: Müller Hoffmann & Partner
(86) International application number: PCT/KR2024/011536
(87) International publication number: WO 2025/033909

(57) **Abstract**

The present disclosure relates to a security paper detection device capable of detecting whether or not security paper is used by using security paper, and a security paper printing device including same and, more specifically, to a technology capable of determining whether or not security paper is used by including a security paper detection sensor and a double-feed detection sensor. The security paper detection device according to an embodiment of the present disclosure may be installed separately from a printing device, and comprises: a double-feed detection sensor that utilizes ultrasonic transmission features, and is composed of a transmission unit and a reception unit installed at positions facing each other at a predetermined angle, which is an acute angle, with respect to a paper transport path in the printing device; a security paper detection sensor installed in the paper transport path in the printing device; and a control unit that determines whether the paper is double-fed paper on the basis of a detection value from the double-feed detection sensor, determines whether the paper being fed is security paper or ordinary paper on the basis of a detection value from the security paper detection sensor, and determines that the paper is wrongly transported if the paper is determined to be ordinary paper or double-fed paper, thereby stopping a printing function.

## Description

### Technical Field

The present disclosure relates to a security paper detection device capable of detecting the presence of security paper by using security paper, and a security paper printing device including the same and, more specifically, to a technology capable of determining the presence of security paper by including a security paper detection sensor and a double-feed detection sensor. In this disclosure, the term "printing device" encompasses not only a multifunction device which incorporates the functions of a printer, fax, copier, and scanner, but also a device that implements printer, fax, copier, or scanner functionality only.

### Background Art

Recently, with the rapid development of enterprises, security measures against corporate document leaks are being devised. As one such measure, a document security technology using security paper has recently been developed. The security paper refers to paper into which amorphous alloy is inserted, generating signals within an alternating-current magnetic field that can distinguish the material's properties.

Such security paper is detected at a gate by an electromagnetic (EM) sensor. Specifically, when the amorphous alloy in the security paper approaches an alternating-current magnetic field generated by a sensor, Barkhausen noise is produced in the amorphous alloy due to the alternating-current magnetic field. By detecting the harmonic spectrum of this large Barkhausen noise, the presence of security paper can be determined. The sensor may include a transmitting coil that generates an alternating-current magnetic field, a receiving coil that senses variations in the alternating-current magnetic field generated by the transmitting coil, and an electronic system that controls the alternating-current magnetic field generated by the transmitting coil and processes signals received by the receiving coil. Since the security paper is detected at the gate, the printed matter on the security paper can be prevented from being leaked.

Alternatively, a primary magnetic field generated from an inductive sensor induces an eddy current in the amorphous alloy in the paper being fed, and a secondary magnetic field generated by this eddy current affects the primary magnetic field generated by the inductive sensor, thereby changing its intensity. Accordingly, the inductive sensor transmits a security paper detection signal to a control unit depending on whether there is a variation in the intensity of the magnetic field generated by itself. The printing device is controlled so that printing is carried out only on security paper but not on ordinary paper.

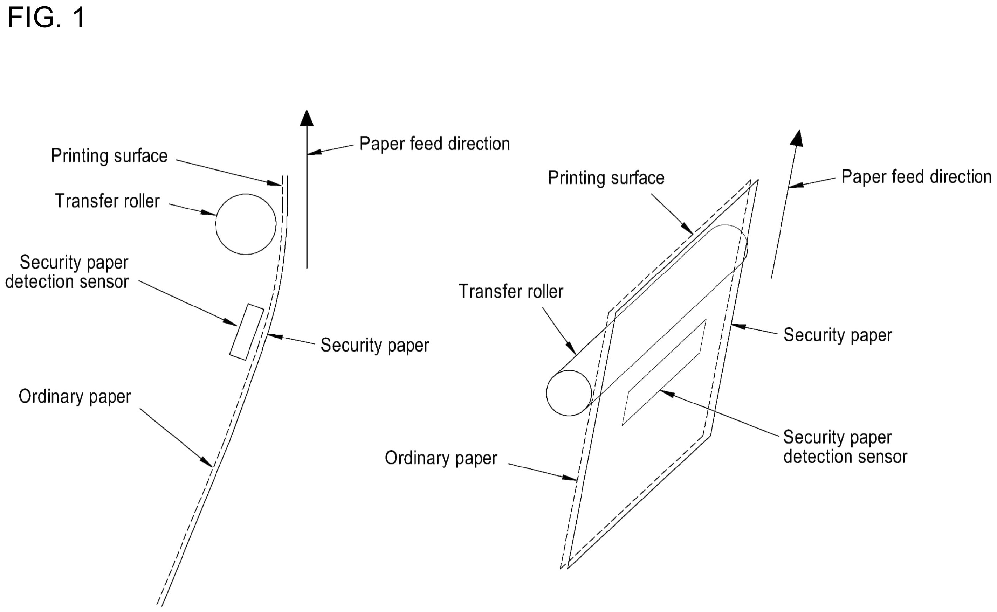

In the above-described prior art technology, as illustrated in FIG. 1, when printing is performed after attaching security paper to the back side of a printing surface of ordinary paper, the inductive sensor installed in the printing device recognizes the presence of security paper because of the security paper attached on the back and proceeds with normal printing. In a case where the security paper attached to the back side of the printing surface is removed after completion of printing and the ordinary paper is carried through the gate, the printed matter on the ordinary paper cannot be detected at the gate, resulting in a leak of the printed matter.

This is because the security paper detection sensor installed in the printing device cannot precisely recognize the thickness of the paper. Therefore, even if ordinary paper is placed directly in front of the security paper detection sensor, when the ordinary paper has security paper attached on the back, the sensor detects the material (for example, a metal wire) contained in the security paper by which security paper can be identified. Accordingly, there is a need for a technology for accurately detecting the presence of security paper when there is an attempt to print on ordinary paper attached to security paper, in order to prevent the ordinary paper from being recognized as security paper.

### Prior Art Document

(Patent Document) Korean Patent Laid-Open Publication No. 10-2019-0014057

### DETAILED DESCRIPTION OF THE INVENTION

### Technical Problem

The present disclosure has been devised to solve the problems of the prior art described above, and its purpose is to provide a security paper detection device capable of accurately detecting the presence of security paper by precisely detecting a double feed, and a security paper printing device including the same.

### Technical Solution

According to an embodiment of the present disclosure, a security paper detection device may be installed separately from a printing device, and comprises: a double-feed detection sensor that utilizes ultrasonic transmission features, and is composed of a transmission unit and a reception unit installed at positions facing each other at a predetermined angle, which is an acute angle, with respect to a paper transport path in the printing device; a security paper detection sensor installed in the paper transport path in the printing device; and a control unit that determines whether the paper is double-fed paper on the basis of a detection value from the double-feed detection sensor, determines whether the paper being fed is security paper or ordinary paper on the basis of a detection value from the security paper detection sensor, and determines that the paper is wrongly transported if the paper is determined to be ordinary paper or double-fed paper, thereby stopping a printing function.

### Effects of the Invention

According to an embodiment of the present disclosure, it is possible to provide a security paper detection device capable of accurately detecting the presence of security paper by including a security paper detection sensor and a double-feed detection device capable of being installed separately from a printing device.

Furthermore, according to an embodiment of the present disclosure, it is possible to improve double-feed detection performance since a transmission unit and reception unit in the double-feed detection sensor are installed facing each other at a predetermined angle with respect to a paper transport path.

Furthermore, according to an embodiment of the present disclosure, it is possible to provide a security paper printing device that can enhance security paper detection performance by including the security paper detection device.

### BRIEF DESCRIPTION OF THE DRAWINGS

FIG. 1 is a diagram illustrating the problems of the conventional art.
FIG. 2 is a block diagram illustrating a security paper detection device according to an embodiment of the present disclosure.
FIG. 3 is a schematic diagram illustrating a security paper detection device according to an embodiment of the disclosure.
FIG. 4 is a schematic diagram showing one example of the installation positions of the transmission unit and reception unit in the double-feed detection sensor.
FIG. 5 is a block diagram illustrating one example of the configuration of the double-feed detection sensor.
FIG. 6 is a diagram showing a schematic view and waveform for explaining double-feed detection according to an embodiment of the present disclosure.
FIG. 7 is a plan view showing an FPCB (Flexible Printed Circuit Board) on which a security paper detection sensor is installed according to an embodiment of the present disclosure.
FIG. 8 is a diagram illustrating the spacing between a first optical sensor and the security paper detection sensor according to an embodiment of the present disclosure.
FIG. 9 is a diagram illustrating a point in time at which the security paper detection sensor detects a first detection value and a period in which a second detection value is detected, according to an embodiment of the present disclosure.
FIG. 10 is a block diagram illustrating a security paper printing device according to an embodiment of the present disclosure.

### Best Mode for Implementing the Invention

A security paper detection device according to an embodiment of the present disclosure may be installed separately from a printing device, and comprises: a double-feed detection sensor that utilizes ultrasonic transmission features, and is composed of a transmission unit and a reception unit installed at positions facing each other at a predetermined angle, which is an acute angle, with respect to a paper transport path in the printing device; a security paper detection sensor installed in the paper transport path in the printing device; and a control unit that determines whether the paper is double-fed paper on the basis of a detection value from the double-feed detection sensor, determines whether the paper being fed is security paper or ordinary paper on the basis of a detection value from the security paper detection sensor, and determines that the paper is wrongly transported if the paper is determined to be ordinary paper or double-fed paper, thereby stopping a printing function.

Furthermore, according to the embodiment, the transmission unit includes an ultrasonic transducer and an oscillator connected to the ultrasonic transducer, and the reception unit includes an ultrasonic transducer and an amplifier connected to the ultrasonic transducer.

Furthermore, according to the embodiment, the control unit includes a signal analysis unit connected to the amplifier.

Furthermore, according to the embodiment, the control unit receives a signal from a sensor installed on the paper transport path in the printing device to detect whether the paper has reached a corresponding position, and determines whether the paper is double-fed paper by activating the double-feed detection sensor after the paper has reached the installation position of the sensor.

Furthermore, according to the embodiment, the security paper detection device further comprises an optical sensor that detects the position of paper on the paper transport path, wherein the control unit receives a signal from the optical sensor indicating that the paper has reached the installation position of the optical sensor, and after the paper has reached the installation position of the optical sensor or after the security paper detection sensor has detected whether the paper is security paper, the control unit activates the double-feed detection sensor to determine whether the paper is double-fed paper.

A security paper printing device according to an embodiment of the present disclosure comprises: the security paper detection device; a KCMY LED Head or LSU provided in a commercial printing device to form an image to be printed on printing paper; a plurality of sensors provided in a commercial printing device and installed on a paper transport path to check the position of paper transported along the paper transport path; an actuating unit provided in a commercial printing device to actuate a roller to transport paper along the paper transport path; a printer engine controller provided in a commercial printing device to transmit print data to the KCMY LED Head or LSU, receive sensor signals from the plurality of sensors, and drive the actuating unit; and a switching unit provided between the printer engine controller and the KCMY LED Head or LSU, between the printer engine controller and any one of the plurality of sensors, and between the printer engine controller and the actuating unit, and controlled by the control unit of the security paper detection device to switch ON/OFF the connection from the printer engine controller to the KCMY LED Head or LSU, to switch ON/OFF the connection from any one of the plurality of sensors to the printer engine controller, or to switch ON/OFF the connection from the printer engine controller to the actuating unit.

### Mode for Implementing the Invention

Hereinafter, a security paper detection device and a security paper printing device including the same according to the present disclosure will be described with reference to the accompanying drawings. The following description describes a preferred embodiment of the disclosure.

As described above, the term "printing device" as used herein encompasses not only a multifunction device which incorporates the functions of a printer, fax, copier, and scanner, but also a device that implements printer, fax, copier, or scanner functionality only. Generally, the multifunction device refers to a device capable of performing all of the functions of a printer, fax, copier, and scanner. However, as will be apparent from the following description, since the present disclosure involves distinguishing whether the paper being fed is ordinary paper or security paper and performs printing accordingly, the term "printing device" may also be understood to refer to a printer, fax, or copier alone. That is, even if the device functions only as a printer or only as a copier, it still falls within the scope of the disclosure if it implements the functions described below depending on the paper being fed. Alternatively, a conventional multifunction device that implements all of the above functions naturally also falls within the scope of the disclosure.

In the present disclosure, the term "double feed" encompasses both a situation in which two or more sheets of paper are overlapped and fed at once, and a situation in which two or more sheets are stuck together and fed at once (sometimes separately referred to as "overlap feed" but both are encompassed herein).

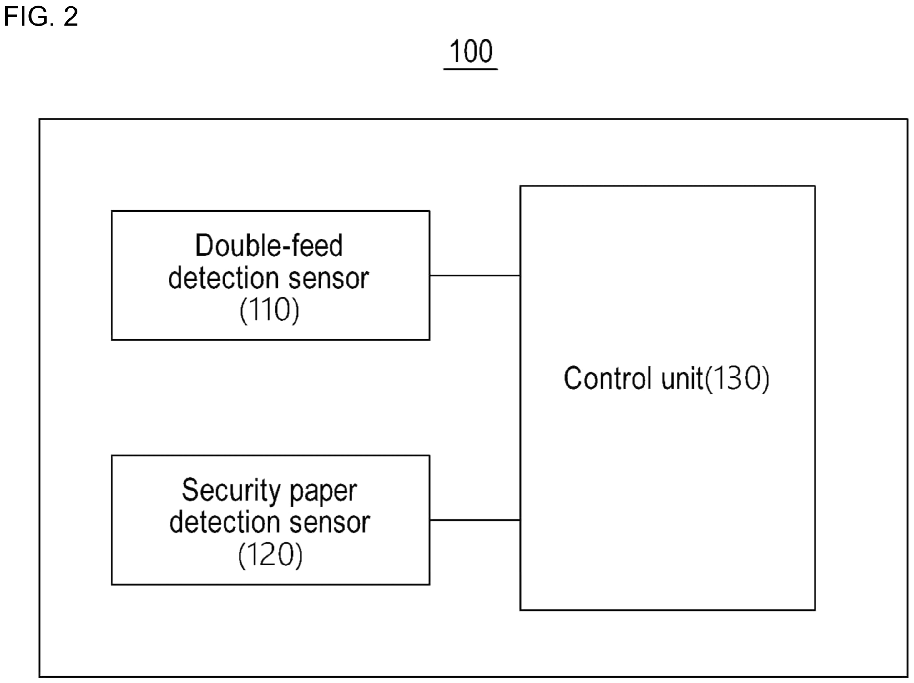

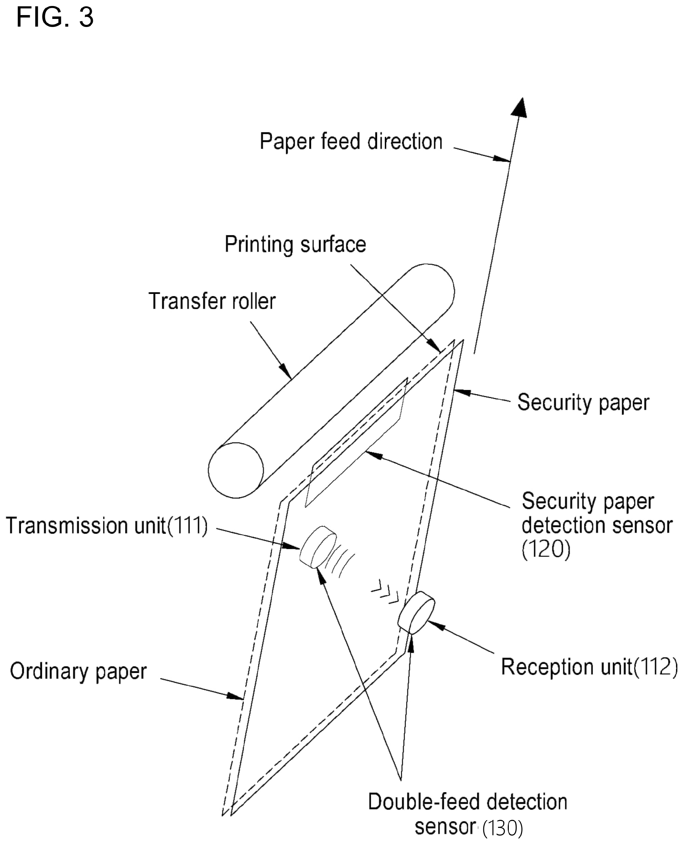

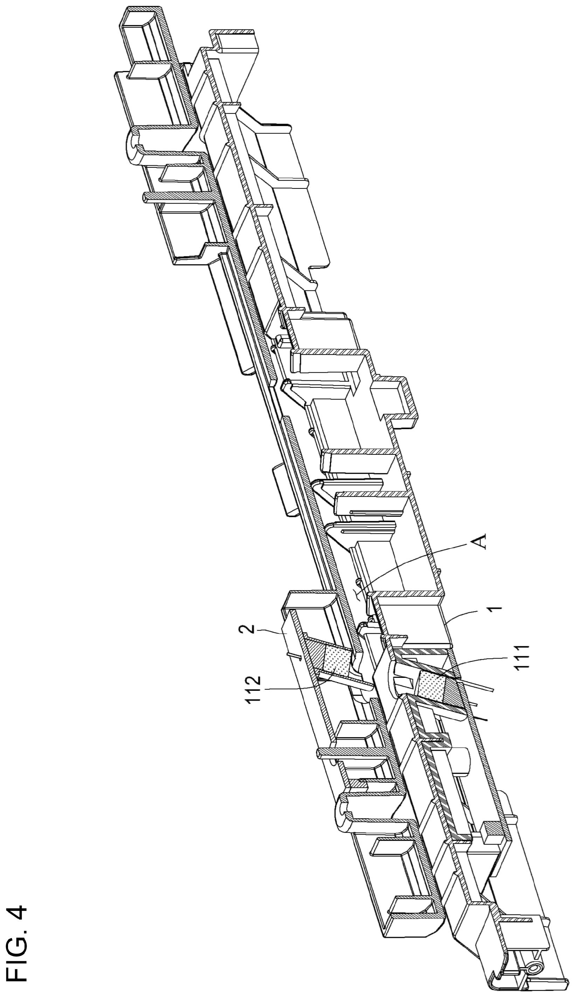

FIG. 2 is a block diagram illustrating a security paper detection device according to an embodiment of the present disclosure. FIG. 3 is a schematic diagram illustrating a security paper detection device according to an embodiment of the disclosure. FIG. 4 is a schematic diagram showing one example of the installation positions of the transmission unit and reception unit in the double-feed detection sensor.

Referring to FIG. 2, FIG. 3, and FIG. 4, a security paper detection device 100 according to an embodiment of the present disclosure comprises: a double-feed detection sensor 110 that utilizes ultrasonic transmission features, and is composed of a transmission unit 111 and a reception unit 112 installed at positions facing each other at a predetermined angle, which is an acute angle, with respect to a paper transport path A in the printing device; a security paper detection sensor 120 installed in the paper transport path A in the printing device; and a control unit 130 that determines whether the paper is double-fed paper on the basis of a detection value from the double-feed detection sensor 110, determines whether the paper being fed is security paper or ordinary paper on the basis of a detection value from the security paper detection sensor 120, and determines that the paper is wrongly transported if the paper is determined to be ordinary paper or double-fed paper, thereby stopping a printing function.

According to an embodiment, the security paper detection device 100 may be installed separately from the printing device. Here, the expression "may be installed separately" means that the device is installed as an independent unit in an existing printing device that operates normally, and does not necessarily require physical installation outside the printing device.

As illustrated in FIG. 4, the transmission unit 111 and reception unit 112 of the double-feed detection device 110 may be installed at an outer paper guide 1 an inner paper guide 2 in a commercial printing device such that they face each other at a predetermined angle, which is an acute angle, with respect to the paper transport path A formed between the outer paper guide 1 and the inner paper guide 2.

The double-feed detection sensor 110 may be installed either at a front end of the security paper detection sensor 120 along the paper transport path A or at a rear end of the security paper detection sensor 120 along the paper transport path A.

The control unit 130 controls the double-feed detection sensor 110 to begin detecting a double feed, simultaneously when a paper pickup sensor in a commercial printing device detects paper being picked up (simultaneously upon detecting that printing has started), regardless of whether it is installed at a front end or rear of the security paper detection sensor 120. It is preferable that an ultrasonic sensor of the double-feed detection sensor 110 operates only during a period in which a double feed should be detected under the control of the control unit 130. To this end, the control unit 130 may receive signals from a sensor on the paper transport path of a commercial printing device, such as the paper pickup sensor. When a signal is received from a sensor (e.g., paper pickup sensor) on the paper transport path that is installed immediately before the installation position of the double-feed detection sensor 110, the control unit 130 activates the ultrasonic sensor of the double-feed detection sensor 110 so that a double feed or overlap feed of paper on the transport path can be detected.

The security paper detection sensor 120 detects whether amorphous alloy is present in printing paper, and the double-feed detection sensor 110 detects whether the paper being fed is double-fed paper.

When an ultrasonic wave generated from the transmission unit 111 passes through paper (i.e., a different medium) as it travels through an air layer, the direction of travel of the ultrasonic wave is refracted. When passing through a single sheet of paper, that is, in the order of air layer, paper, and air layer, the ultrasonic wave is not refracted very much and reaches the reception unit 112 on the opposite side. On the other hand, when passing through multiple sheets of paper (double feed or overlap feed), that is, multiple different media like air layer, paper, air layer, paper, and air layer, the ultrasonic wave is refracted much and does not reach the reception unit 112 on the opposite side. With this characteristic, an ultrasonic wave is refracted much due to a different medium such as an air layer between two sheets of paper as the ultrasonic wave passes through double-fed or overlap-fed paper regardless of the thickness of a single sheet of paper, which is advantageous in that the detection performance is not affected much by the precision of the installation position or the thickness of paper.

There is a method that determines whether sheets of paper are overlapped by calculating the paper thickness in such a way that the distance to the paper is measured from the top and the bottom using sound reflection rather than ultrasound reflection. However, in this method, the thickness of paper to be detected should be generally around 0.1 mm, meaning that the precision of the installation positions of the sensors needs to be managed to within 0.1 mm. Moreover, it is very difficult to control errors caused by paper bending, movement, etc. In addition, even for paper of the same thickness, it is difficult to distinguish between a single thick sheet of paper and multiple sheets of paper that are overlapped or double-fed.

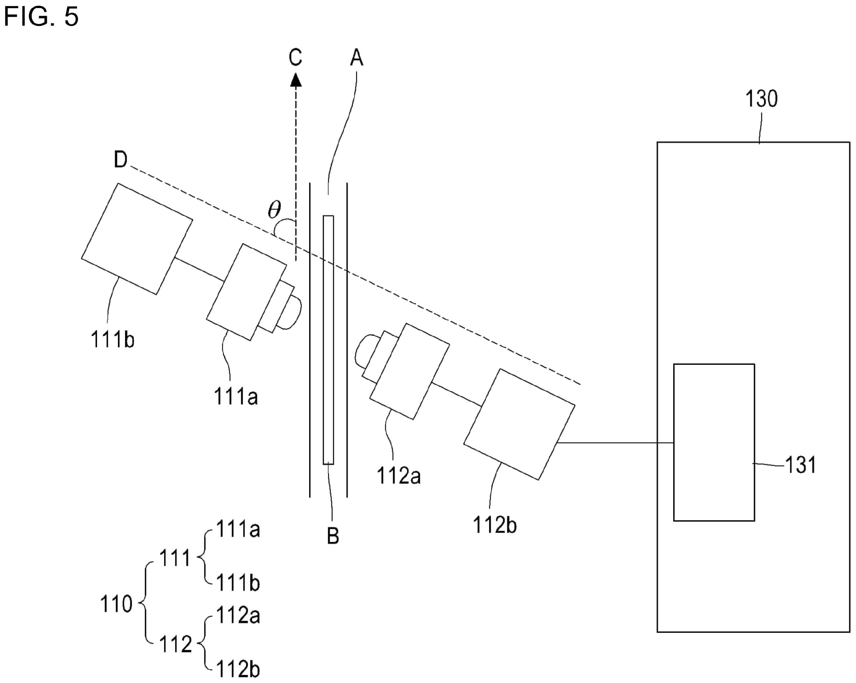

FIG. 5 is a block diagram illustrating one example of the configuration of the double-feed detection sensor.

Referring to FIG. 5, according to an embodiment, in the double-feed detection sensor 110, the transmission unit 111 includes an ultrasonic transducer 111a and an oscillator 111b connected to the ultrasonic transducer 111a, and the reception unit 112 includes an ultrasonic transducer 112a and an amplifier 112b connected to the ultrasonic transducer 112a. In addition, according to an embodiment, the control unit 130 includes a signal analysis unit 131 connected to the amplifier 112b.

The double-feed detection sensor 110 detects the presence of a double feed by using ultrasonic waves. In the double-feed detection sensor 110, the ultrasonic transducer 111a and the ultrasonic transducer 112a are installed on opposite sides of the paper transport path A in the security paper detection device 100, facing each other at a predetermined angle with respect to the paper transport path A. The oscillator 111b generates a frequency pulse signal to drive the ultrasonic transducer 111a. The ultrasonic transducer 111a receives the frequency pulse signal and transmits an ultrasonic pulse to the paper transport path A. The ultrasonic pulse passes through the paper B being fed and reaches the ultrasonic transducer 112a. The ultrasonic transducer 112a receives the ultrasonic pulse and outputs a detection signal. The amplifier 112b amplifies the detection signal inputted from the ultrasonic transducer 112a and outputs it to a signal analyzer 131 of the control unit 130. The signal analyzer 131 analyzes the detection signal amplified by the amplifier 112b, thereby enabling the control unit 130 to determine whether the paper B in the paper transport path A is double-fed paper. The medium transmission characteristics of ultrasonic waves differ between a single sheet of paper and two sheets of paper. In the case of a double feed or overlap feed, an air layer exists between the sheets. As can be seen in FIG. 5, where the paper transport direction C and the virtual line D form a predetermined angle θ, the transmission unit 111 and the reception unit 112 are installed facing each other at a predetermined angle with respect to the paper transport path A so that the air layer is positioned across a relatively long (wide) range between the transmission unit 111 and the reception unit 112. This reduces the influence of multiple reflection and significantly changes the medium transmission characteristics, thereby making it easy to detect a double feed. To reduce the influence of multiple reflection, it is preferable that the transmission unit 111 and the reception unit 112 be installed facing each other at an angle θ of 15 to 20 degrees with respect to the paper transport direction C. Refraction within the same medium does not vary significantly with thickness. However, in the case of refraction across medium 1/medium 2/medium 1 (in which case medium 1 is paper and medium 2 is air), the refraction characteristics change substantially. Therefore, a single sheet of paper having a thickness equivalent to an overlap feed or double feed is not detected as double-fed paper.

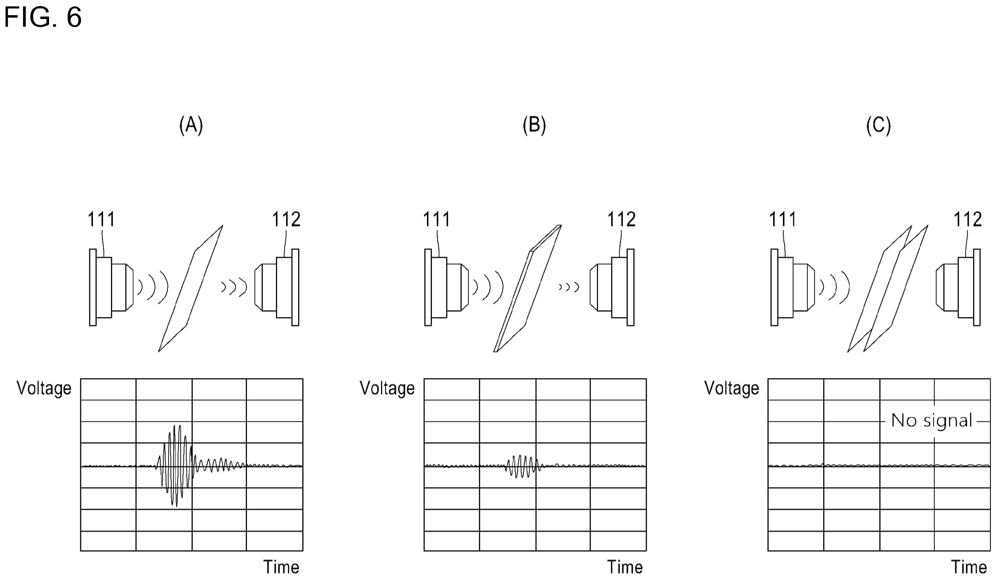

FIG. 6 is a diagram showing a schematic view and waveform for explaining double-feed detection according to an embodiment of the present disclosure.

(a) of FIG. 6 illustrates that a single sheet of paper is being fed. (b) of FIG. 6 illustrates that a single sheet of paper having a relatively greater thickness than that of (a) of FIG. 6 is being fed. (c) of FIG. 6 illustrates that paper is being double-fed.

For example, when there is a single sheet of paper as shown in (a) of FIG. 6, and, when there is a single sheet of paper relatively thicker than that in (a) of FIG. 6 as shown in (b) of FIG. 6, the ultrasonic wave generated by the transmission unit 111 passes through the paper and reaches the reception unit 112, thereby producing a waveform. On the other hand, as shown in (c) of FIG. 6, when the paper is double-fed paper, the ultrasonic wave generated by the transmission unit 111 does not reach the reception unit 112, and thus no waveform appears, making it possible to determine whether the paper is double-fed.

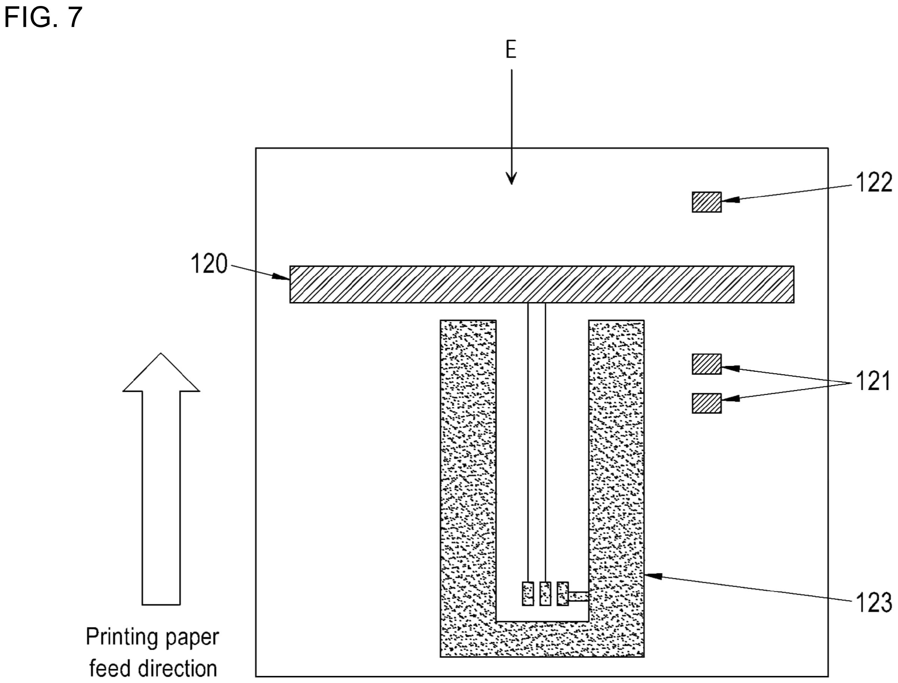

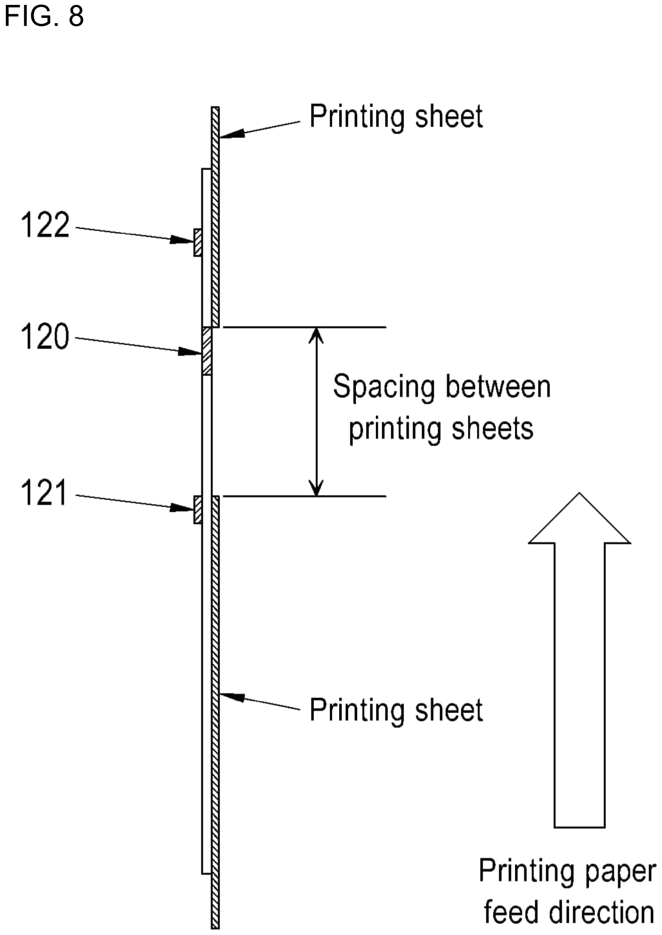

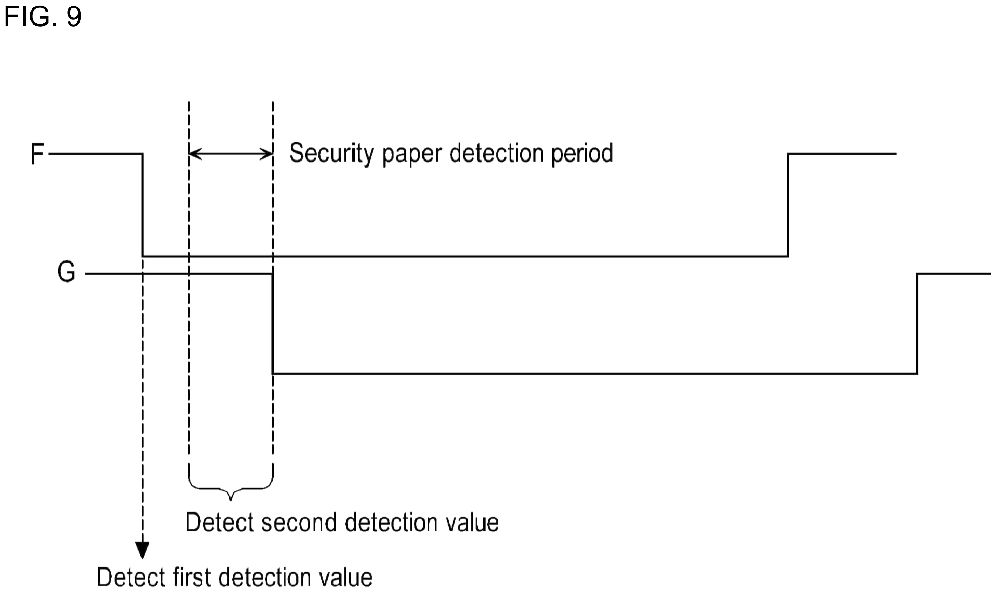

FIG. 7 is a plan view showing an FPCB (Flexible Printed Circuit Board) on which a security paper detection sensor is installed according to an embodiment of the present disclosure. FIG. 8 is a diagram illustrating the spacing between a first optical sensor and the security paper detection sensor according to an embodiment of the present disclosure. FIG. 9 is a diagram illustrating a point in time at which the security paper detection sensor detects a first detection value and a period in which a second detection value is detected, according to an embodiment of the present disclosure.

For example, referring to FIGS. 2 and 7, the security paper detection device 100 may be provided in the form of an FPCB (E). On the FPCB (E), a first optical sensor 121 is installed to detect the presence or absence of printing paper fed along the feeding direction of printing paper, and a security paper detection sensor 120 is subsequently installed to detect whether the fed printing paper is security paper. The security paper detection sensor 120 does not detect printing paper until the time when the printing paper to be read is detected by the first optical sensor 121, at which point it detects a first detection value. Thereafter, it detects one or more second detection values for the printing paper to be read along the feeding path for a predetermined period of time. Referring to FIG. 9, F denotes the output value of the first optical sensor 121. When the printing paper enters and the output value of the first optical sensor 121 changes - specifically, when waveform F shifts from High to Low - the security paper detection sensor 120 detects the first detection value. Thereafter, the security paper detection sensor 120 detects the second detection values for the printing paper during the passage of the printing paper for a predetermined time. Referring to FIG. 8, it is preferable that the spacing between the first optical sensor 121 and the security paper detection sensor 120 be smaller than the distance between a printing sheet and a subsequent printing sheet along the feeding path. The reason is that the first detection value needs to be sensed when there is no printing paper at the position of the security paper detection sensor 120. However, if the spacing is larger than the distance between the trailing edge of the preceding sheet and the leading edge of the subsequent sheet, the first detection value may be sensed while printing paper is present, making it impossible to accurately determine the presence of security paper. According to an embodiment, the FPCB (E) may include one or more holes, and the first optical sensor 121 may be installed in one of the holes, taking into account the spacing between continuously fed printing sheets in the printing device. In another embodiment, the FPCB (E) may include one or more holes, and the first optical sensor 121 may be installed in each of the holes, whereby the FPCB (E) includes two or more first optical sensors 121 spaced apart along the feeding direction of printing paper. In this case, considering the spacing between continuously fed printing sheets in the printing device being used, the control unit 130 selects one 121 of the two or more first optical sensors 121 that detects the presence or absence of fed printing paper. At the time when the printing paper to be read is detected by the selected first optical sensor 121, the security paper detection sensor 120 is controlled to detect the first detection value. According to an embodiment, the security paper detection sensor 120 installed on the FPCB (E) may be in the form of a bar arranged perpendicular to the feeding direction of printing paper. In this case, a wide area in the transverse direction of the printing paper can be detected in a short time, thereby improving the accuracy of detecting security paper. A printing paper contact portion of the FPCB (E) may additionally include a grounding metal pattern 123 that removes static electricity by contacting the printing paper. According to an embodiment, the FPCB (E) may include a second optical sensor 122 installed behind the security paper detection sensor 120 along the feeding path of printing paper. Referring to FIG. 9, G denotes the output value of the second optical sensor 122. In this case, the security paper detection sensor 120 detects the second detection value until the second optical sensor 122 detects printing paper.

As a result, the security paper detection sensor 120 detects a magnetic field change caused by a front portion of an incoming printing sheet passing through. The security paper detection sensor 120 transmits a detected analog signal to the control unit 130, and the control unit 130 converts the analog signal into a digital signal and then compares the first detection value with one or more second detection values detected by the security paper detection sensor 120. If the comparison value is greater than a predetermined threshold, the sheet is determined to be security paper; if the comparison value is less than or equal to the predetermined threshold, the sheet is determined to be ordinary paper.

**In** a case where the double-feed detection sensor 110 is installed at the rear of the security paper detection sensor 120, the control unit 130 does not receive a signal from the paper pickup sensor. Instead, the double-feed detection sensor 110 may begin detecting whether there is a double feed, after a predetermined time after the security paper detection sensor 120 detects the second detection value and, or after a predetermined time after the second optical sensor 122 detects printing paper.

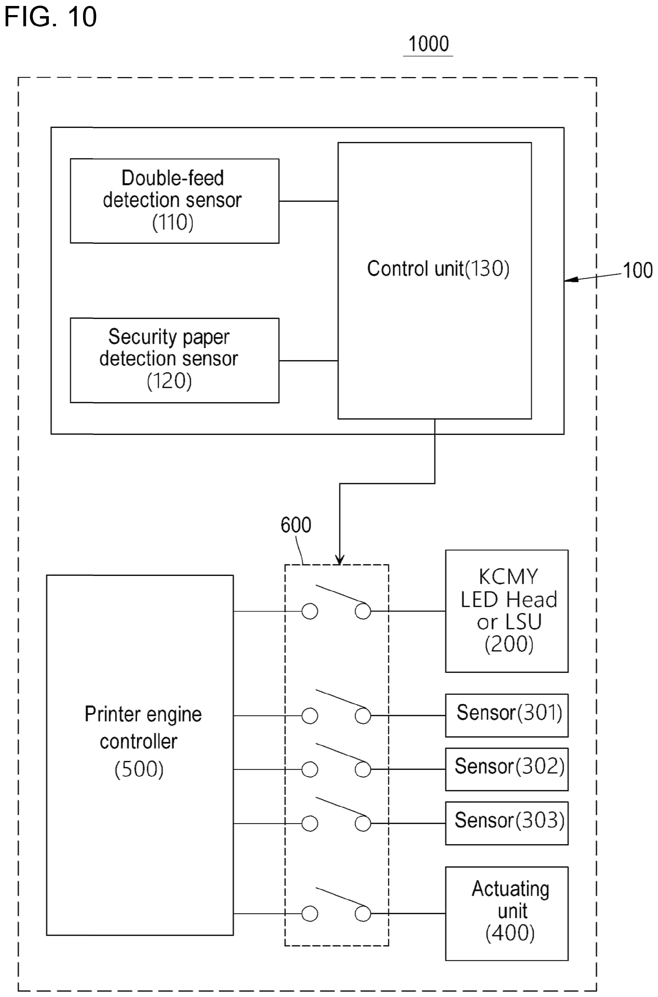

FIG. 10 is a block diagram illustrating a security paper printing device according to an embodiment of the present disclosure.

Referring to FIG. 10, the security paper printing device 100 according to the embodiment of the present disclosure includes a KCMY LED Head or LSU 200 provided in a commercial printing device to form an image to be printed on printing paper, a plurality of sensors 301, 302, and 303 provided in a commercial printing device and installed on a paper transport path to check the position of paper transported along the paper transport path, an actuating unit 400 provided in a commercial printing device to actuate a roller to transport paper along the paper transport path, a printer engine controller 500 provided in a commercial printing device to transmit print data to the KCMY LED Head or LSU 200, receive sensor signals from the plurality of sensors 301, 302, and 303, and drive the actuating unit 400, and a switching unit 600 provided between the printer engine controller 500 and the KCMY LED Head or LSU 200, between the printer engine controller 500 and any one of the plurality of sensors 301, 302, and 303, and between the printer engine controller 500 and the actuating unit 400, and controlled by the control unit 130 of the security paper detection device 100 to switch ON/OFF the connection from the printer engine controller 500 to the KCMY LED Head or LSU 200, to switch ON/OFF the connection from any one of the plurality of sensors 301, 302, and 303 to the printer engine controller 500, or to switch ON/OFF the connection from the printer engine controller 500 to the actuating unit 400.

The printer engine controller 500, within the security paper printing device 1000, transmits print data to the KCMY LED Head or LSU 200, receives sensor signals from the plurality of sensors 301, 302, and 303, and drives the actuating unit 400 to perform printing operations. The plurality of sensors 301, 302, and 303 include, for example, a registration sensor, a door-open sensor, an exit sensor, and a paper-in sensor. The actuating unit 400 is an actuator generally provided in a printing device, and may include, for example, various motors and clutches.

The control unit 130 of the security paper detection device 100 controls the security paper printing device 1000 to selectively suspend its printing function according to detection signals inputted from the double-feed detection sensor 110 and/or the security paper detection sensor 120. For example, when a detection signal corresponding to a double feed is inputted from the double-feed detection sensor 110, or when a detection signal corresponding to security paper is not inputted from the security paper detection sensor 120, the control unit 130 controls the security paper printing device 1000 to suspend its printing function.

According to an embodiment, in a case where the double-feed detection sensor 110 is installed at a front end of the security paper detection sensor 120, the presence of a double feed is detected first. Thus, upon determining that there is a double feed based on a detection signal corresponding to a double feed that is inputted from the double-feed detection sensor 110, the control unit 130 treats the paper as ordinary paper and controls the security paper printing device 1000 to suspend its printing function, even if a detection signal corresponding to security paper is subsequently inputted from the security paper detection sensor 120.

According to an embodiment, when the double-feed detection sensor 110 is installed at a rear end of the security paper detection sensor 120, the control unit 130 controls the security paper printing device 1000 to suspend its printing function upon determining that there is a double feed based on a detection signal corresponding to a double feed that is inputted from the double-feed detection sensor 110, when a detection signal corresponding to security paper has been inputted first from the security paper detection sensor 120.

For example, the control unit 130 controls the switching unit 400 to switch the signal going from the printer engine controller 500 to the KCMY LED Head or LSU 200, thereby turning the connection OFF and suspending the printing function. In addition, for example, the control unit 130 controls the switching unit 400 to switch the signal going from any one of the plurality of sensors 301, 302, and 303 to the printer engine controller 500, thereby turning the connection OFF and suspending the printing function. Furthermore, for example, the control unit 130 controls the switching unit 400 to switch the signal going from the printer engine controller 500 to the driving unit 400, thereby turning the connection OFF and controlling the security paper printing device 1000 to suspend its printing function.

As described above, the present disclosure is not limited to the specific preferred embodiments described above, and anyone having ordinary skill in the art to which the present disclosure pertains can make various modifications without departing from the gist of the present disclosure claimed in the claims, and such modifications are within the scope of the claims.

### Industrial Applicability

It is possible to provide a security paper detection device capable of accurately detecting the presence of security paper because its ability to perform precise double-feed detection, and a security paper printing device including the same.

## Claims

1. A security paper detection device capable of being installed in a printing device, comprising:
a double-feed detection sensor that utilizes ultrasonic transmission features, and is composed of a transmission unit and a reception unit installed at positions facing each other at a predetermined angle, which is an acute angle, with respect to a paper transport path in the printing device;
a security paper detection sensor installed to be in contact with paper transported in the paper transport path in the printing device; and
a control unit that determines whether the paper is double-fed paper on the basis of a detection value from the double-feed detection sensor, determines whether the paper being fed is security paper or ordinary paper on the basis of a detection value from the security paper detection sensor, and determines that the paper is wrongly transported if the paper is determined to be ordinary paper or double-fed paper, thereby stopping a printing function.

2. The security paper detection device of claim 1, wherein the transmission unit includes an ultrasonic transducer and an oscillator connected to the ultrasonic transducer, and the reception unit includes an ultrasonic transducer and an amplifier connected to the ultrasonic transducer.

3. The security paper detection device of claim 2, wherein the control unit includes a signal analysis unit connected to the amplifier.

4. The security paper detection device of claim 1, wherein the predetermined angle is 15 degrees to 20 degrees.

5. The security paper detection device of claim 1, wherein the control unit receives a signal from a sensor installed on the paper transport path in the printing device to detect whether the paper has reached a corresponding position, and determines whether the paper is double-fed paper by activating the double-feed detection sensor after the paper has reached the installation position of the sensor.

6. The security paper detection device of claim 1, further comprising an optical sensor that detects the position of paper on the paper transport path,
wherein the control unit receives a signal from the optical sensor indicating that the paper has reached the installation position of the optical sensor, and after the paper has reached the installation position of the optical sensor or after the security paper detection sensor has detected whether the paper is security paper, the control unit activates the double-feed detection sensor to determine whether the paper is double-fed paper.

7. A security paper printing device comprising:
the security paper detection device of any one of claims 1 to 6;
a KCMY LED Head or LSU provided in a commercial printing device to form an image to be printed on printing paper;
a plurality of sensors provided in a commercial printing device and installed on a paper transport path to check the position of paper transported along the paper transport path;
an actuating unit provided in a commercial printing device to actuate a roller to transport paper along the paper transport path;
a printer engine controller provided in a commercial printing device to transmit print data to the KCMY LED Head or LSU, receive sensor signals from the plurality of sensors, and drive the actuating unit; and
a switching unit provided between the printer engine controller and the KCMY LED Head or LSU, between the printer engine controller and any one of the plurality of sensors, and between the printer engine controller and the actuating unit, and controlled by the control unit of the security paper detection device to switch ON/OFF the connection from the printer engine controller to the KCMY LED Head or LSU, to switch ON/OFF the connection from any one of the plurality of sensors to the printer engine controller, or to switch ON/OFF the connection from the printer engine controller to the actuating unit.
